# EUROPEAN PATENT APPLICATION

(11) **EP 2 977 997 A1**
(43) Date of publication of application: **27.01.2016**
(21) Application number: 14768056.5
(22) Date of filing: 13.03.2014
(51) Int. Cl.: H01F 41/02, B22F 1/00, B22F 3/24, B22F 9/00, C22C 38/00, H01F 1/057, H01F 1/08

(54) **RFeB-BASED SINTERED MAGNET PRODUCTION METHOD AND RFeB-BASED SINTERED MAGNETS**

(30) Priority: 18.03.2013 JP 2013055739
(71) Applicant: Intermetallics Co. Ltd., Nakatsugawa-shi, Gifu 509-9132 (JP); Daido Steel Co.,Ltd., Nagoya-shi, Aichi 461-8581 (JP)
(72) Inventor: SAGAWA, Masato, Kyoto-shi, Kyoto 615-8245 (JP); TAKAGI, Shinobu, Nagoya-shi, Aichi 457-8545 (JP)
(74) Representative: Hoeger, Stellrecht & Partner Patentanwälte mbB
(86) International application number: PCT/JP2014/056704
(87) International publication number: WO 2014/148355

(57) **Abstract**

The present invention addresses the problem of providing a method for easily producing an RFeB system sintered magnet having high coercivity and being capable of suppressing the influence of eddy current during a period of use while being composed of a plurality of unit sintered magnets strongly bonded together. It is a method for producing an RFeB system sintered magnet composed of at least two unit sintered magnets 11 bonded to each other at flat bonding surfaces, each unit sintered magnet composed of crystal grains whose main phase is made of R₂Fe₁₄B containing, as a main rare-earth element R, a light rare-earth element R_{L} which is at least one element selected from the group of Nd and Pr. A paste 12 prepared by mixing an organic matter and a metallic powder containing at least one element selected from the heavy rare-earth elements R_{H} of Dy, Ho and Tb is sandwiched between the mutually neighboring unit sintered magnets 11, and a grain boundary diffusion treatment is performed by performing a heating process, with the paste 12 in contact with each bonding surface. The coercivity is improved by this grain boundary diffusion treatment. Furthermore, since an oxide or similar compound of R_{H} and/or R_{L} is formed at the boundary of the unit sintered magnets 11, the influence of eddy current during a period of use is suppressed, and the unit sintered magnets 11 are strongly bonded together.

## Description

### TECHNICAL FIELD

The present invention relates to a method for producing an RFeB system sintered magnet whose main phase is made of R₂Fe₁₄B containing, as its main rare-earth element R, at least one element selected from the group of Nd and Pr, as well as an RFeB system sintered magnet produced by the same method. The "RFeB system sintered magnet" is not limited to a magnet which does not contain any other element than Nd and/or Pr, Fe and B; it may also contain a rare-earth element which is neither Nd nor Pr, or contain other elements such as Co, Ni, Cu or Al.

### BACKGROUND ART

RFeB system sintered magnets were discovered in 1982 by Sagawa (one of the present inventors) and other researchers. The magnets have the characteristic that most of their magnetic characteristics (e.g. residual magnetic flux density) are far better than those of other conventional permanent magnets. Therefore, RFeB system sintered magnets are used in a variety of products, such as driving motors for hybrid or electric automobiles, battery-assisted bicycle motors, industrial motors, voice coil motors (used in hard disk drives or other apparatuses), high-grade speakers, headphones, and permanent magnetic resonance imaging systems.

Earlier versions of the RFeB system sintered magnet had the defect that the coercivity H_{cJ} was comparatively low among various magnetic properties. Later studies have revealed that a presence of Dy, Ho and Tb (these three elements are hereinafter called the "heavy rare-earth elements" and abbreviated as "R_{H}") within the RFeB system sintered magnet makes reverse magnetic domains less likely to occur and thereby improves the coercivity. The reverse magnetic domain has the characteristic that, when a reverse magnetic field opposite to the direction of magnetization is applied to the RFeB system sintered magnet, it initially occurs in a region near the boundary of a grain and subsequently develops into the inside of the grain as well as onto the neighboring grains. Accordingly, in order to prevent the initial occurrence of the reverse magnetic domain, R_{H} only needs to be present in regions near the boundaries of the grains so that it can prevent the reverse magnetic domain from occurring in the regions near the boundaries of the grains. On the other hand, increasing the R_{H} content unfavorably reduces the residual magnetic flux density Bᵣ and consequently decreases the maximum energy product (BH)ₘₐₓ. Increasing the R_{H} content is also undesirable in that R_{H} are rare elements and their production sites are unevenly distributed globally. Accordingly, in order to increase the coercivity (and thereby impede the formation of the reverse magnetic domain) while decreasing the R_{H} content to the lowest possible level, it is preferable to make the R_{H} exist at high concentrations more in a region near the grain boundary rather than in deeper regions within the grain.

Patent Literature 1 discloses a method in which the metal foil of R_{H} (in one example, Dy foil with a purity of 99.9 %) is made to be in contact with an RFeB system sintered magnet and heated, whereby R_{H} atoms are diffused into the RFeB system sintered magnet and the coercivity is thereby increased. When this method is used, the R_{H} atoms are diffused through the boundaries of the grains into the RFeB system sintered magnet. Such a treatment of diffusing R_{H} atoms through the grain boundaries is called the "grain boundary diffusion treatment." By the grain boundary diffusion treatment, R_{H} atoms can be made to exist at higher concentrations in regions near the grain boundaries than in deeper regions in each individual grain. As a result, it is possible to improve the coercivity H_{cJ} with a smaller amount of R_{H} usage, while reducing the amount of decrease in the residual magnetic flux density Bᵣ and the maximum energy product (BH)ₘₐₓ.

Patent Literature 1 also discloses a method in which a plurality of RFeB system sintered magnets (each individual RFeB system sintered magnet is hereinafter called the "unit sintered magnet") are stacked in a pile and heated, with the metal foil of R_{H} sandwiched between mutually neighboring unit sintered magnets. By this technique, the effect of improving the coercivity by the grain boundary diffusion treatment can be obtained, and furthermore, an RFeB system sintered magnet with mutually neighboring unit sintered magnets bonded together can be obtained since the remaining metal foil of R_{H} which has not been diffused into the grain boundaries functions as an adhesive. If such an RFeB system sintered magnet is used in a motor or similar device, an eddy current induced by an externally applied changing magnetic field cannot easily flow beyond the boundary of the unit sintered magnets. Therefore, energy loss and temperature increase due to the eddy current in the entire RFeB system sintered magnet will be suppressed.

### CITATION LIST

### PATENT LITERATURE

Patent Literature 1: JP 2007-258455 A

### SUMMARY OF INVENTION

### TECHNICAL PROBLEM

In the RFeB system sintered magnet described in Patent Literature 1, it is difficult to sufficiently suppress the eddy current, since the metal foil of R_{H} at the boundaries between the unit sintered magnets has a comparatively low electric resistivity. Therefore, in Patent Literature 1, it is suggested that the metal foil of Nb, a thin plate of oxide, or a similar insertion with higher electric resistivity than R_{H} may be provided between the individual RFeB system sintered magnets in addition to the R_{H} metal foil. However, this method requires two sheets of R_{H} metal foil to be provided on both sides of the aforementioned metal foil or thin plate inserted at the boundary of the two mutually neighboring unit sintered magnets, with one sheet on the surface of each of the two unit sintered magnets, in order to obtain the effect of the grain boundary diffusion. This makes the manufacturing process complex, and furthermore, it weakens the bond of the two mutually neighboring unit sintered magnets since a plurality of kinds of metal foil or thin plate made of different kinds of materials exist between the mutually neighboring unit sintered magnets.

The problem to be solved by the present invention is to provide a method for easily producing an RFeB system sintered magnet having high coercivity and being capable of suppressing the influence of eddy current during a period of use while being composed of a plurality of unit sintered magnets strongly bonded together, as well as an RFeB system sintered magnet produced by this method.

### SOLUTION TO PROBLEM

The RFeB system sintered magnet production method according to the present invention developed for solving the previously described problem is a method for producing an RFeB system sintered magnet composed of at least two unit sintered magnets bonded to each other at flat bonding surfaces, each unit sintered magnet composed of crystal grains whose main phase is made of R₂Fe₁₄B containing, as a main rare-earth element R, a light rare-earth element R_{L} which is at least one element selected from the group of Nd and Pr, wherein:
a grain boundary diffusion treatment is performed by performing a heating process with a paste prepared by mixing an organic matter and a metallic powder containing a heavy rare-earth element R_{H} which is at least one element selected from the group of Dy, Ho and Tb sandwiched between the mutually neighboring unit sintered magnets and in contact with each bonding surface.

The heating process can be performed under the same conditions as in the conventional grain boundary diffusion treatment. For example, according to Patent Literature 1, the heating process is performed within the range of 700°C-1000°C. This heating temperature should be set within a range where the grain boundary diffusion can most efficiently occur while causing little sublimation of the heavy rare-earth element R_{H}. A preferable range is 850°C-950°C.

In the present invention, three or more unit sintered magnets may be bonded together. In that case, the paste should be sandwiched between every two mutually neighboring unit sintered magnets.

According to the present invention, the diffusion of the heavy rare-earth element R_{H} into the mutually neighboring unit sintered magnets through their grain boundaries is achieved by performing the heating process with a paste containing the heavy rare-earth element R_{H} in contact with the bonding surfaces of those unit sintered magnets. Therefore, similarly to the case of using the conventional grain boundary diffusion treatment, it is possible to improve the coercivity H_{cJ}, with a small amount of R_{H}, while reducing the amount of decrease in the residual magnetic flux density Bᵣ and the maximum energy product (BH)ₘₐₓ. Furthermore, the present invention produces the following effect.

In the present invention, a paste containing an organic matter and the metal of the heavy rare-earth element R_{H} is used to make the rare-earth element R_{H} be in contact with the bonding surface of the unit sintered magnet. In the grain boundary diffusion treatment, the carbon, hydrogen and/or oxygen contained in the organic matter reacts with the heavy rare-earth element R_{H} and/or the light rare-earth element R_{L} in the unit sintered magnet displaced by the heavy rare-earth element R_{H}. As a result, a boundary portion made of carbide, hydroxide and/or oxide of the heavy rare-earth element R_{H} and/or the light rare-earth element R_{L} is formed at the boundary between the two unit sintered magnets in the RFeB system sintered magnet after the grain boundary diffusion treatment. The heavy rare-earth element R_{H} and/or the light rare-earth element R_{L} which exists in the boundary portion is hereinafter called the "boundary-portion rare-earth element." The boundary portion has the function of preventing eddy current from being induced by a changing magnetic field applied from the outside of the RFeB system sintered magnet. The boundary portion has a higher electric resistivity than the R_{H} foil described in Patent Literature 1, and therefore, can produce a higher effect of suppressing the eddy current. The boundary portion also acts as an adhesive for strongly bonding the two unit sintered magnets.

The RFeB system sintered magnet according to the present invention is a magnet composed of at least two unit sintered magnets bonded to each other at flat bonding surfaces, each unit sintered magnet being a sintered compact composed of crystal grains whose main phase is made of R₂Fe₁₄B containing, as a main rare-earth element R, a light rare-earth element R_{L} which is at least one element selected from the group of Nd and Pr, wherein:
the two unit sintered magnets are bonded by a boundary portion composed of one or more substances selected from the group of carbide, hydroxide and oxide of a boundary-portion rare-earth element R_{B} which is at least one element selected from the group of the light rare-earth element R_{L} and heavy rare-earth elements R_{H} of Dy, Ho and Tb; and
a heavy rare-earth element R_{H} is diffused within the two unit sintered magnets through the grain boundaries of the unit sintered magnets.

### ADVANTAGEOUS EFFECTS OF THE INVENTION

According to the present invention, it is possible to easily obtain an RFeB system sintered magnet whose coercivity is improved by a grain boundary diffusion treatment and in which the boundary portion whose electric resistivity is increased by a carbide, hydroxide and/or oxide suppresses the influence of eddy current during a period of use while strongly bonding the plurality of unit sintered magnets together. Furthermore, according to the present invention, it is possible to obtain an RFeB system sintered magnet which has such a large amount of thickness that cannot be easily treated by conventional grain boundary diffusion methods and which nevertheless has R_{H} diffused into regions near the center of the magnet.

### BRIEF DESCRIPTION OF DRAWINGS

Figs. 1A-1C and 1E are vertical sectional views, and Fig. 1D is a top view, showing one embodiment of the RFeB system sintered magnet production method according to the present invention and one embodiment of the RFeB system sintered magnet according to the present invention created by the same method.
Figs. 2A-2C are vertical sectional views showing another embodiment of the RFeB system sintered magnet production method and the RFeB system sintered magnet according to the present invention.
Figs. 3A-1, 3B and 3C-1 are top views, and Figs. 3A-2 and 3C-2 are vertical sectional views, showing still another embodiment of the RFeB system sintered magnet production method and the RFeB system sintered magnet according to the present invention.
Figs. 4A and 4B are top views showing still another embodiment of the RFeB system sintered magnet according to the present invention.
Figs. 5A-5C are photographs showing side views of the RFeB system sintered magnets of the first through third examples.
Fig. 6A shows the result of an EPMA measurement performed on the RFeB system sintered magnet of the third example, and Fig. 6B is a schematic diagram showing the position in the RFeB system sintered magnet on which the measurement was performed.

### DESCRIPTION OF EMBODIMENTS

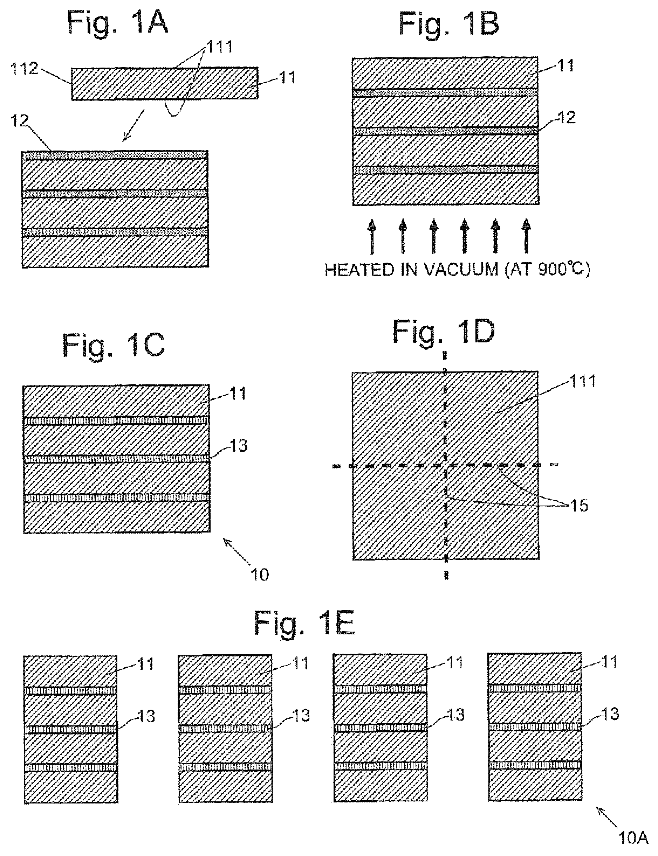

Embodiments and examples of the RFeB system sintered magnet production method and the RFeB system sintered magnet according to the present invention are described using Figs. 1A-6B.

### EMBODIMENTS

(1) Production Method for RFeB System Sintered Magnet

The production method for the RFeB system sintered magnet of the present embodiment includes the following processes: (1-1) creation of unit sintered magnets, (1-2) preparation of a paste made from a metallic powder containing a heavy rare-earth element R_{H} (which is hereinafter called the "R_{H}-containing metallic powder") and an organic matter mixed together, and (1-3) creation of an RFeB system sintered magnet including two or more unit sintered magnets bonded together, using the unit sintered magnets and paste prepared in the previous processes. These processes are hereinafter sequentially described.

### (1-1) Creation of Unit Sintered Magnets

Initially, a raw-material alloy containing 25-40 % by weight of R_{L} and 0.6-1.6 % by weight of B, with the balance being Fe and unavoidable impurities is prepared. A portion of R_{L} may be replaced by other rare-earth elements, such as R_{H}. A portion of B may be replaced by C. A portion of Fe may be replaced by other transitional metal elements (e.g. Co or Ni). The alloy may additionally contain one or more kinds of additive elements selected from the group of Al, Si, Cr, Mn, Co, Ni, Cu, Zn, Mo and Zr (typically, the additive amount is 0.1-2.0 % by weight of each kind). The composition of the raw-material alloy used in an experiment (which will be described later) was Nd: 23.3 % by weight, Pr: 5.0 % by weight, Dy: 3.8% by weight, B: 0.99 % by weight, Co: 0.9 % by weight, Cu: 0.1 % by weight, and Al: 0.2 % by weight, with the balance being Fe.

This raw-material alloy is melted, and the molten alloy is processed into raw-material pieces by strip casting. Subsequently, the raw-material pieces are made to occlude hydrogen, whereby the pieces are coarsely pulverized to a size ranging from 0.1 mm to a few mm. Furthermore, the obtained particles are finely pulverized with a jet mill to obtain an alloy powder whose particle size as measured by a laser method is 0.1-10 µm, and more preferably 3-5 µm. A lubricant (e.g. methyl laurate) may be added as the grinding aid in the coarse pulverization and/or fine pulverization process. The methods of coarse and fine pulverizations are not limited to the aforementioned ones; for example, a method using an attritor, ball mill or bead mill may also be employed.

After a lubricant (e.g. methyl laurate) is added to the obtained alloy powder (typically, the additive amount is approximately 0.1 % by weight) and mixed, the alloy powder is placed in a filling container having a rectangular-parallelepiped inner space of 20 mm×20 mm×5 mm. Then, the alloy powder held in the filling container is oriented in a magnetic field, with no pressure applied. Subsequently, the alloy powder held in the filling container is heated (typically, the heating temperature is 950-1050°C), with no pressure applied, whereby the alloy powder is sintered and a unit sintered magnet having a rectangular-parallelepiped shape is obtained. The obtained unit sintered magnet is ground to an approximately 14-mm square shape with a thickness of approximately 3 mm. Among the six faces of the unit sintered magnet, the two faces having the approximately 14-mm square shape are hereinafter called the "upper and lower faces", and the four other faces (ca. 14 mm×3 mm) are called the "side faces."

### (1-2) Preparation of Paste Made from R_{H}-Containing Metallic Powder and Organic Matter Mixed Together

In the present embodiment, a powder of TbNiAl alloy containing 92 % by weight of Tb, 4.3 % by weight of Ni and 3.7 % by weight of Al was used as the R_{H}-containing metallic powder. The particle size of the R_{H}-containing metallic powder should preferable be as small as possible in order to diffuse it into the unit sintered magnet as uniformly as possible. However, an extremely small particle size leads to a considerable increase in the time and cost for the fine pulverization. Therefore, the particle size should be 2-100 µm, preferably 2-50 µm, and more preferably 2-20 µm. As the organic matter, silicone grease is used. Silicone is a high-molecular compound whose main skeleton includes the siloxane bond formed by silicon atoms and oxygen atoms bonded together. Therefore, silicone grease acts as an oxidizer for the heavy rare-earth element R_{H} and/or the light rare-earth element R_{L} in the paste during the grain boundary diffusion treatment.

The mixture ratio by weight of the R_{H}-containing metallic powder and the silicone grease may be arbitrarily selected so as to adjust the viscosity of the paste as desired. However, a lower percentage of the R_{H}-containing metallic powder means a smaller amount of R_{H} atoms permeating through the base material during the grain boundary diffusion treatment. Accordingly, the percentage of the R_{H}-containing metallic powder should be 70 % by weight or higher, preferably 80 % by weight or higher, and more preferably 90 % by weight or higher. The amount of silicone grease should preferably be 5 % by weight or higher, since no satisfactory paste can be obtained if the amount of silicone grease is less than 5 % by weight. In addition to the silicone grease, a silicone-based organic solvent may also be added to adjust the viscosity.

Needless to say, the paste usable in the present invention is not limited to the previous example. As the R_{H}-containing metallic powder, a powder of simple R_{H} metal may be used, or an alloy and/or intermetallic compound containing R_{H}, other than the aforementioned TbNiAl alloy, may also be used. A mixture of a powder of simple metal, alloy and/or intermetallic compound of R_{H} and another kind of metallic powder can also be used. As for the organic matter, a hydrocarbon system polymeric resin (e.g. paraffin), hydrocarbon system organic solvent or the like can also be used.

### (1-3) Creation of RFeB System Sintered Magnet Including Two or More Unit Sintered Magnets Bonded Together

A method for creating an RFeB system sintered magnet including two or more unit sintered magnets bonded together, using the unit sintered magnets and the paste prepared in the previously described manner, is described with reference to Figs. 1A-1E. Initially, in n pieces of unit sintered magnets 11 (n is an integer equal to or greater than two), the paste 12 is sandwiched between every two mutually neighboring unit sintered magnets 11 to make the paste 12 be in contact with the bonding surfaces of the mutually neighboring unit sintered magnets 11 (Fig. 1A). As will be described later, in the present embodiment, an experiment was performed for n=2, 3 and 4. Naturally, n may be equal to or greater than five.

With the paste 12 being in contact with the unit sintered magnets 11 in this manner, the magnets are heated to 900°C in a vacuum atmosphere (Fig. 1B). By this process, the Tb atoms in the paste 12 are diffused through the grain boundaries of the unit sintered magnets 11 into the inner regions. Meanwhile, in the paste 12 sandwiched between the mutually neighboring unit sintered magnets 11, a portion of Tb reacts with the oxygen atoms contained in the paste 12 and becomes oxidized. Concurrently, the Nd atoms displaced by the Tb atoms in the unit sintered magnet 11 are deposited in the space between the unit sintered magnets 11 and react with the oxygen atoms in the paste 12 to form an oxide. Thus, a boundary layer (boundary portion) 13 containing oxides of Tb and Nd is formed between the unit sintered magnets 11 (Fig. 1C). In the present embodiment, the obtained RFeB system sintered magnet 10 is subsequently cut in the stacked direction along the cutting planes 15 which form a cross shape on the upper and lower faces 111 (Fig. 1D), to obtain four RFeB system sintered magnets 10A each having an approximately 7-mm square face with the thickness corresponding to n pieces of unit sintered magnets, i.e. approximately 3×n mm (Fig. 1E).

In the RFeB system sintered magnets 10 and 10A obtained in this manner, the unit sintered magnets 11 are strongly bonded together by the boundary layers 13. Furthermore, since the electric resistivity of the boundary layers 13 is increased by the oxides, the magnets can suppress eddy current which occurs when the magnets are used in an environment with a changing external magnetic field, e.g. in a motor.

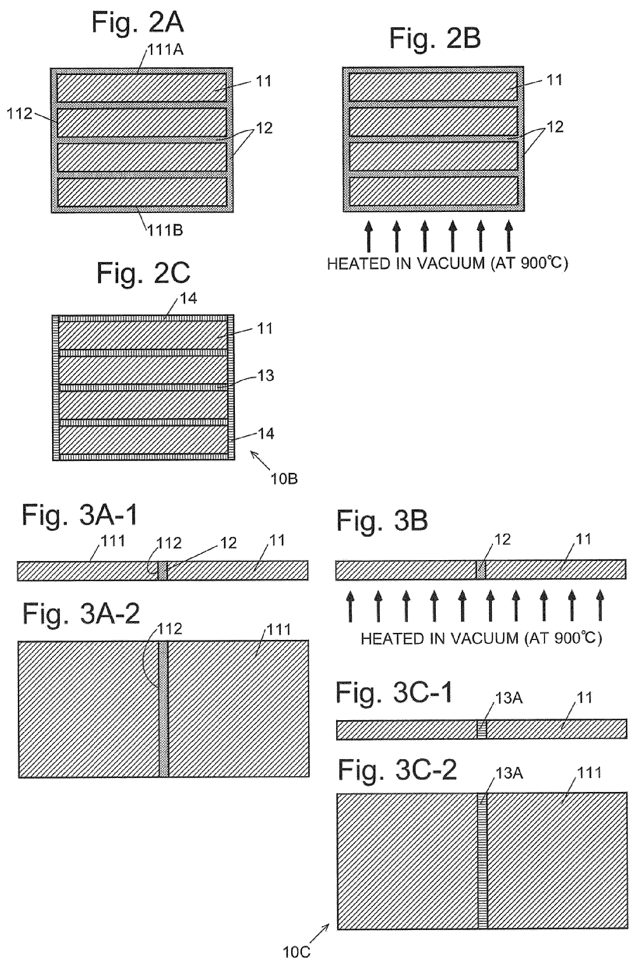

The paste 12 may also be applied to a portion or the entirety of the surface of the laminated body consisting of the n pieces of stacked unit sintered magnets 11, i.e. the upper face 111A of the uppermost unit sintered magnet 11, the lower face 111B of the lowermost unit sintered magnet 11, and/or the side faces 112 of each unit sintered magnet 11, in addition to the surfaces between the mutually neighboring unit sintered magnets 11 (Fig. 2A). By heating this laminated body to 900°C in vacuum (Fig. 2B), an RFeB system sintered magnet 10B is obtained (Fig. 2C) in which a surface layer 14 containing oxides of Tb and Nd is formed on the surface of the laminated body in addition to the boundary layers 13 formed between the unit sintered magnets 11 as in the previously described example. The surface layer 14 protects the RFeB system sintered magnets 10 and 10A against oxidization

In the example of Figs. 1A through 2C, the n pieces of unit sintered magnets 11 are stacked by joining their upper and lower faces 111. Alternatively, the unit sintered magnets 11 may be laterally arranged, with their side faces 112 joined (Figs 3A-1 and 3A-2). In this case, the paste 12 is made to be in contact with the side faces 112 so that it will be sandwiched between the mutually neighboring unit sintered magnets 11. In this state, the magnets are heated to 900°C in a vacuum atmosphere (Fig. 3B), whereby an RFeB system sintered magnet 10C having a boundary portion 13A between the unit sintered magnets 11 is obtained (Figs. 3C-1 and 3C-2). Similarly to the previously described boundary layer 13, the boundary portion 13A contains oxides of Tb and Nd. The paste 12 may also be applied to the surface of the unit sintered magnets 11 in addition to their mutually facing sides so as to form the surface layer together with the boundary portion 13A.

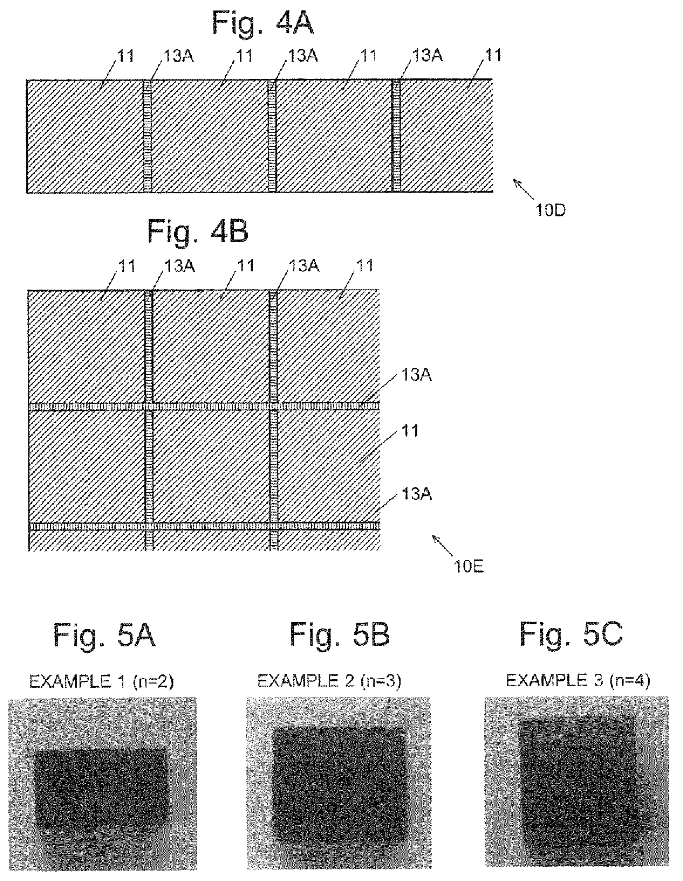

The example shown in Fig. 3A-1 through 3C-2 consists of two unit sintered magnets 11 arranged next to each other. It is also possible to linearly arrange three or more magnets, as shown in Fig. 4A (RFeB system sintered magnet 10D), or to arrange magnets in a matrix form with rows and columns, as shown in Fig. 4B (RFeB system sintered magnet 10E).

It is also possible to combine the example of Figs. 1A-1E or 2A-2C and that of Figs. 3A-1 through 3C-2; i.e. the unit sintered magnets 11 may be vertically stacked by joining their upper and lower faces 111, and may also be laterally arranged by joining their side faces 112.

In the previously described examples, silicone grease is used to prepare the paste 12. As explained earlier, when silicone grease is used, oxides are formed in the boundary layer 13. Additionally, carbides, hydroxides and/or other compounds originating from the organic matter contained in the paste 12 are also formed in the boundary layer 13. If amines (which contain nitrogen atoms) is also added to the paste 12 as a dispersant for helping dispersion of the metallic powder in the paste 12, nitrides will also be formed in the boundary layer 13 in addition to the carbides and hydroxides. The previously described effect of the present embodiment can be similarly obtained in these cases as well.

Hereinafter described is the result of an experiment performed on RFeB system sintered magnets created in the present embodiment. In the experiment, three samples of the RFeB system sintered magnet 10A, each having unit sintered magnets 11 stacked in a pile with two (n=2), three (n=3) or four (n=4) layers, were created as Examples 1, 2 and 3, respectively. In Examples 4 and 5, two unit sintered magnets 11 were laterally arranged, with their side faces 112 bonded together (Figs. 3A-1 and 3A-2).

Figs. 5A-5C are photographs respectively showing side views of the RFeB system sintered magnets of Examples 1-3. In any of these RFeB system sintered magnets, the boundaries of the mutually neighboring unit sintered magnets 11 are visually recognizable. At these boundaries, the unit sintered magnets 11 are strongly bonded together.

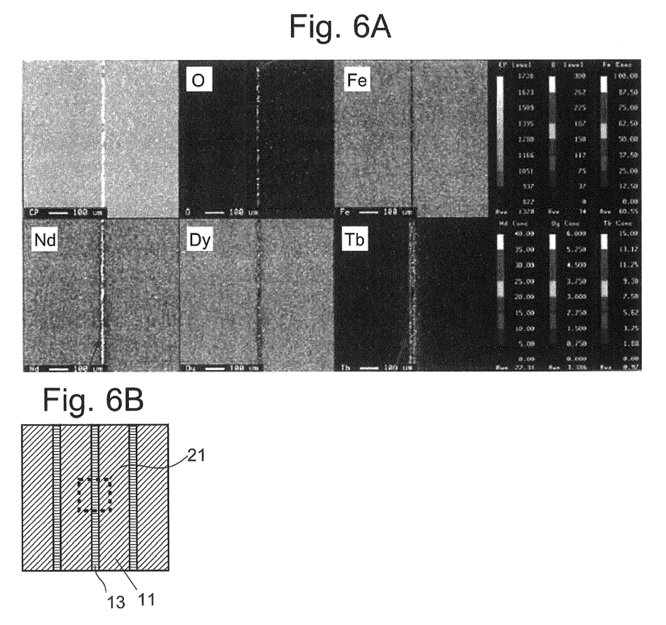

Fig. 6A shows the result of an experiment performed on the RFeB system sintered magnet of Example 3, in which the atoms of O (oxygen), Fe, Nd, Dy and Tb existing on an area 21 (Fig. 6B) including the central boundary layer 13 among the three layers and the two unit sintered magnets adjacent to the central boundary layer 13 were detected by an EPMA (electron probe microanalysis) method. In this figure, the brighter areas (nearly white) represent the sites which contain higher amounts of atoms than the darker areas (nearly black). Regardless of the kind of element, a stripe-shaped area with a different color from the adjacent areas is vertically formed at the center of the image. This stripe-shaped area corresponds to the boundary layer 13. The other areas correspond to the unit sintered magnets 11.

This result of the EPMA experiment illustrates the following facts: Firstly, in the image showing the Tb content, the boundary layer 13 is brighter than the neighboring areas, which indicates that a higher amount of Tb is contained in the boundary layer 13. Furthermore, within the unit sintered magnets 11, a region closer to the boundary layer 13 has a higher level of brightness. This means that the Tb atoms have been diffused from the paste 12 into the unit sintered magnets 11, and therefore, a greater amount ofTb atoms exist in regions closer to the paste 12 (boundary layer 13).

The Fe and Dy atoms, which are not contained in the paste 12, can be barely found in the boundary layer 13, whereas the Nd atoms, which are also not contained in the paste 12, are present in the boundary layer 13. This means that the Nd atoms which have been displaced by the Tb atoms diffused into the unit sintered magnets 11 have been deposited in the boundary layer 13. The O (oxygen) atoms are barely present in the unit sintered magnets 11 but are abundant in the boundary layer 13.

From these results of the EPMA experiment, it is most likely that (i) the Tb atoms have been diffused from the paste 12 (boundary layer 13) into the unit sintered magnets 11, and (ii) the presence of the Nd, Tb and O atoms in the boundary layer 13 means that oxides of Nd and Tb are formed. Accordingly, in the RFeB system sintered magnets of the present embodiment, the coercivity is improved by the grain boundary diffusion treatment (actually measured values of the coercivity will be presented later), and the boundary layer 13 whose electric resistivity is increased by oxides suppresses the influence of eddy current during a period of use.

Hereinafter described are the results of measurements of magnetic properties and mechanical strength performed on the RFeB system sintered magnets of Examples 1-5 as well as RFeB system sintered magnets prepared as comparative examples, which will be hereinafter described.

The samples prepared as comparative examples were as follows: Two samples of the magnet which had no bonding of the unit sintered magnets 11 were prepared: a unit sintered magnet 11 which was not subjected to the grain boundary diffusion treatment (Comparative Example 1); and a unit sintered magnet 11 which was subjected to the grain boundary diffusion treatment using the paste 12, with no other unit sintered magnet 11 bonded to it (Comparative Example 2). Three more samples were prepared with the aim of comparing the bonding strength of the unit sintered magnets 11: a pile of four unit sintered magnets 11 bonded with an epoxy adhesive (Comparative Example 3), a pile of four unit sintered magnets 11 bonded with a silicone adhesive (Comparative Example 4), and a pile of four unit sintered magnets 11 bonded with an acrylic adhesive (Comparative Example 5). None of the adhesives used in Comparative Examples 3-5 contained R_{H} or other metallic powder.

As the magnetic properties, the residual magnetic flux density Bᵣ and the coercivity H_{cJ} were measured. In the measurement of the mechanical strength, a drop test and transverse test were performed. In the drop test, each magnet was dropped from a height of 100 mm and examined for separation of the mutually bonded unit sintered magnets 11. The drop test was aimed to evaluate the heat resistance of the RFeB system sintered magnets (particularly, at the bonded portion of the unit sintered magnets 11). Accordingly, the test was performed after the RFeB system sintered magnets were heated to a predetermined temperature (100°C, 200°C or 300°C) and held at that temperature for one hour.

The transverse test was performed on Examples 4 and 5 as well as Comparative Examples 1 and 2 according to the Japanese Industrial Standards (JIS R1601). Specifically, for each example, 30 samples were prepared apart from those used in the previous experiments, each sample being 36 mm long, 4.0 mm wide, and 3.0 mm thick. Each sample was subjected to the three-point bending test, with the loading point located at the center in both the length and width directions, and the supporting points located at a distance of 15 mm from the loading point toward both ends in the longitudinal direction. In Examples 4 and 5, the test piece for the transverse test was prepared by laterally bonding two unit sintered magnets 11, with their side faces 112 joined, and cutting out a piece having the aforementioned dimensions with the bonded portion at its center.

The experimental results are shown in Table 1.

**Table 1**

| | Grain Boundary Diffusion Performed | Boundary | n | Stacking Direction | Drop Test | | | Transverse Strength [MPa] | Magnetic Properties | |
|---|---|---|---|---|---|---|---|---|---|---|
| | | | | | 100°C | 200°C | 300°C | | Bᵣ [kG] | H_{cJ} [kOe] |
| Example 1 | Yes | Paste 12 | 2 | Vertical | ○ | ○ | ○ | - | 12.2 | 33.6 |
| Example 2 | Yes | Paste 12 | 3 | Vertical | ○ | ○ | ○ | - | 12.8 | 33.6 |
| Example 3 | Yes | Paste 12 | 4 | Vertical | ○ | ○ | ○ | - | 12.9 | 33.6 |
| Example 4 | Yes | Paste 12 | 2 | Lateral | ○ | ○ | ○ | 386 | 12.1 | 33.4 |
| Example 5 | Yes | Paste 12 | 4 | Lateral | ○ | ○ | ○ | 384 | 12.1 | 33.6 |
| Comparative Example 1 | No | None | 1 | - | - | - | - | 283 | 13.0 | 21.7 |
| Comparative Example 2 | Yes | Paste 12* | 1 | - | - | - | - | 352 | 12.1 | 33.4 |
| Comparative Example 3 | No | Epoxy | 4 | Vertical | ○ | × | × | - | - | - |
| Comparative Example 4 | No | Silicone | 4 | Vertical | ○ | × | × | - | - | - |
| Comparative Example 5 | No | Acrylic | 4 | Vertical | ○ | × | × | - | - | - |

| | | | | | | | | | | |
|---|---|---|---|---|---|---|---|---|---|---|
| * In Comparative Example 2, Paste 12 was only used for grain boundary diffusion treatment. | | | | | | | | | | |

The measured results of the magnetic properties demonstrate that, as compared to the RFeB system sintered magnet of Comparative Example 1 which was not subjected to the grain boundary diffusion treatment, the RFeB system sintered magnets of Examples 1-5 had higher magnetic properties: their coercivity was higher than 1.5 times the comparative example, while the decrease in the residual magnetic flux density Bᵣ due to the diffusion of Tb atoms was as small as less than 1 kG.

In the drop test, no damage (e.g. separation at the bonded portion) was found in the RFeB system sintered magnets of Examples 1-5 at any of the heating temperatures of 100-300°C. In the cases of the RFeB system sintered magnets of Comparative Examples 3-5 created by bonding unit sintered magnets 11 with adhesives, no damage (e.g. separation at the bonded portion) was found when the heating temperature was 100°C. However, when the heating temperature was 200°C or higher, separation occurred at the bonded portion 13. These results confirm that the RFeB system sintered magnets of Examples 1-5 had higher mechanical strengths under high temperatures than the RFeB system sintered magnets of Comparative Examples 3-5.

The result of the transverse test shows that Examples 4 and 5 had higher transverse rupture strengths than Comparative Examples 1 and 2. That is to say, the bonded portion 13 does not only supply Tb for diffusion, but also strongly bonds the unit sintered magnets 11. Furthermore, the Nd-oxide layer formed in the bonded portion 13 functions as a reinforcing member for making the RFeB system sintered magnet stronger.

### REFERENCE SIGNS LIST

- 10, 10A, 10B, 10C, 10D, 10E: RFeB System Sintered Magnet
- 11: Unit Sintered Magnet
- 111: Upper and Lower Faces
- 111A: Upper Face
- 111B: Lower Face
- 112: Side Face
- 12: Paste
- 13: Boundary Layer
- 13A: Boundary Portion
- 14: Surface Layer

## Claims

1. A method for producing an RFeB system sintered magnet composed of at least two unit sintered magnets bonded to each other at flat bonding surfaces, each unit sintered magnet composed of crystal grains whose main phase is made of R₂Fe₁₄B containing, as a main rare-earth element R, a light rare-earth element R_{L} which is at least one element selected from a group of Nd and Pr, wherein:
a grain boundary diffusion treatment is performed by performing a heating process with a paste prepared by mixing an organic matter and a metallic powder containing a heavy rare-earth element R_{H} which is at least one element selected from the group of Dy, Ho and Tb sandwiched between the mutually neighboring unit sintered magnets and in contact with each bonding surface.

2. An RFeB system sintered magnet composed of at least two unit sintered magnets bonded to each other at flat bonding surfaces, each unit sintered magnet being a sintered compact composed of crystal grains whose main phase is made of R₂Fe₁₄B containing, as a main rare-earth element R, a light rare-earth element R_{L} which is at least one element selected from the group ofNd and Pr, wherein:
the two unit sintered magnets are bonded by a boundary portion composed of one or more substances selected from a group of carbide, hydroxide and oxide of a boundary-portion rare-earth element R_{B} which is at least one element selected from a group of the light rare-earth element R_{L} and heavy rare-earth elements R_{H} of Dy, Ho and Tb; and
a heavy rare-earth element R_{H} is diffused within the two unit sintered magnets through grain boundaries of the unit sintered magnets.
